# EUROPEAN PATENT APPLICATION

(11) **EP 3 382 575 A1**
(43) Date of publication of application: **03.10.2018**
(21) Application number: 17275041.6
(22) Date of filing: 27.03.2017
(51) Int. Cl.: G06F 17/30

(54) **ELECTRONIC DOCUMENT FILE ANALYSIS**

(71) Applicant: SKIM IT LTD, Bromsgrove, Worcestershire B61 7AZ (GB)
(72) Inventor: CHARLTON, Christopher, Bromsgrove, Worcestershire B61 7AZ (GB); LEHL, Maria, Bromsgrove, Worcestershire B61 7AZ (GB); OLIVEIRA, Marcia, Bromsgrove, Worcestershire B61 7AZ (GB); BATCHKAROV, Miroslav, Bromsgrove, Worcestershire B61 7AZ (GB)
(74) Representative: EIP

(57) **Abstract**

There is described a computer-implemented method for processing document data comprising content data and styling information. The method involves parsing the document data to identify blocks of content data, each block of content data having associated styling information, and grouping the blocks of content data according to the styling information to form a plurality of groups of blocks. A set of scores is generated for each group of blocks, and a purpose for each group of blocks is predicted using the generated set of scores associated with the group. The blocks in each group are then processed in accordance with the predicted purpose of the group.

## Description

### Technical Field

The present invention relates to the analysis of the content of an electronic document file such as an HTML document file corresponding to a web page. The present invention has particular relevance to the extraction of the core information content from such an electronic document file.

### Background

Web pages from the same website typically share a common template including navigation menus, images, advertising frames and copyright notices; such a template is referred to as the boilerplate of the website. As such, an HTML document file corresponding to a web page typically includes both main content data, that is information that is specific to the core information content of the corresponding web page, and boilerplate data.

When web pages from a website are rendered using a web browser, boilerplate is desirable for various reasons, e.g.:
- to provide a coherent visual effect when web pages are rendered on a user device;
- to facilitate navigation between web pages from the same website and to web pages on other websites; and
- to provide advertising income to the owner of the website.
Nevertheless, boilerplate is extraneous with regard to other types of data processing operation. One example of a data processing operation in which boilerplate is extraneous is the processing performed on an HTML document file by a search engine to index web pages based on the core information content and metadata associated with the web pages, allowing the search engine to display candidate relevant web pages quickly in response to a search query from a user. A second example of processing in which boilerplate is extraneous is the processing performed on an HTML document file by an automatic summarisation program to produce a brief account of the core information content of the corresponding web page. In each of these examples, it is important for the computer program to be able to distinguish the core information content of the web page from other content, such as boilerplate. The process of separating the core information content of an HTML document file from the extraneous content is referred to as extraction. The "extraction" process does not apply to HTML document files exclusively; it also applies to the separation of relevant content from extraneous content within other types of electronic document file.

Existing methods of extraction typically involve segmenting the content of a document file into blocks of data, with each block of data corresponding to a portion of content of the corresponding document (for example a paragraph of the corresponding document). In some examples, these blocks are scored according to a number of features, and a decision as to which blocks are to be extracted and which blocks are to be excluded is based directly on these scores. One such method is implemented in the open source program Dragnet, and is documented in the article "Content Extraction Using a Diverse Feature Set" by M. E. Peters and D. Lecocq (Proceedings of the 22nd International Conference on World Wide Web, pp 89-90, Rio de Janeiro, Brazil, May 13-17, 2013). In other methods, the blocks within a document file are grouped according to the structure of the document object model (DOM). Such methods are disclosed in patent specification US2003229854 AA and in patent specification US2015095770 AA.

### Summary

According to a first aspect of the invention, there is provided a computer-implemented method for processing document data, wherein the document data comprises content data and styling information, the method comprising: parsing the document data to identify blocks of content data, each block of content data having associated styling information; grouping the blocks of content data according to the styling information to form a plurality of groups of blocks; generating a set of scores for each group of blocks; predicting a purpose for each group of blocks using the generated set of scores associated with the group; and processing the blocks in each group in accordance with the predicted purpose of the group.

Electronic document data typically includes content data that conveys information to a user of a user device when the electronic document data is rendered on the user device, along with styling information that defines, explicitly or implicitly, aspects of the rendering of the content data related to how the information conveyed by the content data is presented to the user by the user device, for example the layout and appearance of the rendered content data, but which is otherwise not presented to the user. When used in the context of extraction, the method of grouping the blocks of content data according to styling information allows certain shortcomings of existing methods to be mitigated. For example, in cases where blocks are processed individually, it is possible for an individual block, such as an anomalously short final paragraph of an article, to be wrongfully excluded. On the other hand, in cases where blocks are grouped according to the structure of the DOM, it is possible for blocks to be grouped erroneously; such an example might occur where an advert is embedded in the middle of an article. Furthermore, methods that involve grouping blocks according to the structure of the DOM are sensitive to the specific way that the document is coded; the DOM structure corresponding to a particular document layout is not unique, and such methods may erroneously produce different outputs for documents which have incidentally different DOM structures but which appear identically when rendered on a user device. Such behaviour is undesirable and is avoided by grouping blocks according to the method of the present invention.

Further features and advantages of the invention will become apparent from the following description of a specific embodiment of the invention, given by way of example only, which is made with reference to the accompanying drawings.

### Brief Description of the Drawings

Figure 1 is a flow chart representing the main routine followed by a computer program in processing a document according to one embodiment of the invention;
Figure 2 is a block diagram representing an example of a parse tree;
Figure 3 is a block diagram representing an example of a decorated parse tree;
Figure 4 is a flow chart representing an example of a subroutine followed by a computer program in which blocks are grouped according to styling information;
Figure 5 is a table showing the grouping of blocks in the example introduced in Figure 2;
Figure 6 is a screenshot from a first example web page as rendered by a web browser;
Figure 7 is a screenshot of a second example web page as rendered by a web browser;
Figure 8 is a block diagram showing the main components of a computer system adapted to process documents according to the method of Figure 1;
Figure 9 is a block diagram showing data stored within the memory of a server illustrated in Figure 8;
Figure 10 is a flow chart representing the process performed by the server of Figure 8;
Figure 11 shows a summary of the content extracted from the first example web page of Figure 6; and
Figure 12 shows a summary of the content extracted from the second example web page of Figure 7.

### Detailed Description

The following description and the accompanying drawings relate to a specific example of the invention in which a computer program executes a data processing routine to extract content from a document file written in Hypertext Markup Language (HTML) or Extensible Hypertext Markup Language (XHTML), which for ease of reference will hereafter both be referred to as an HTML document file, corresponding to a web page.

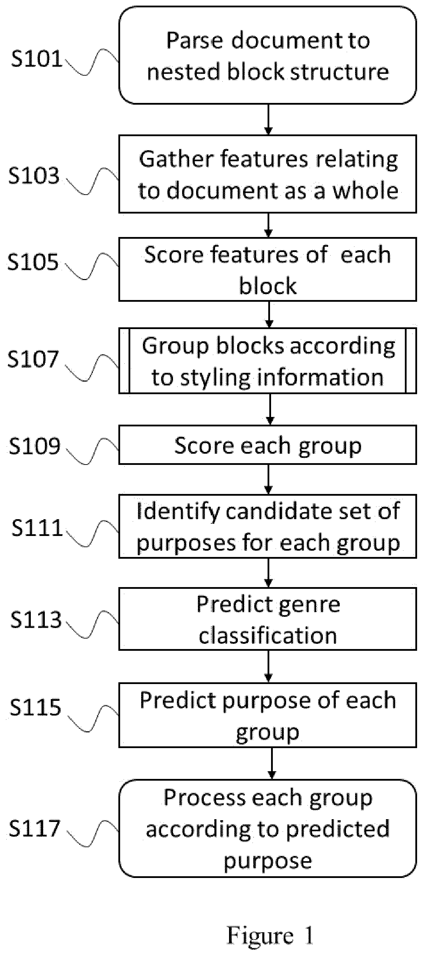

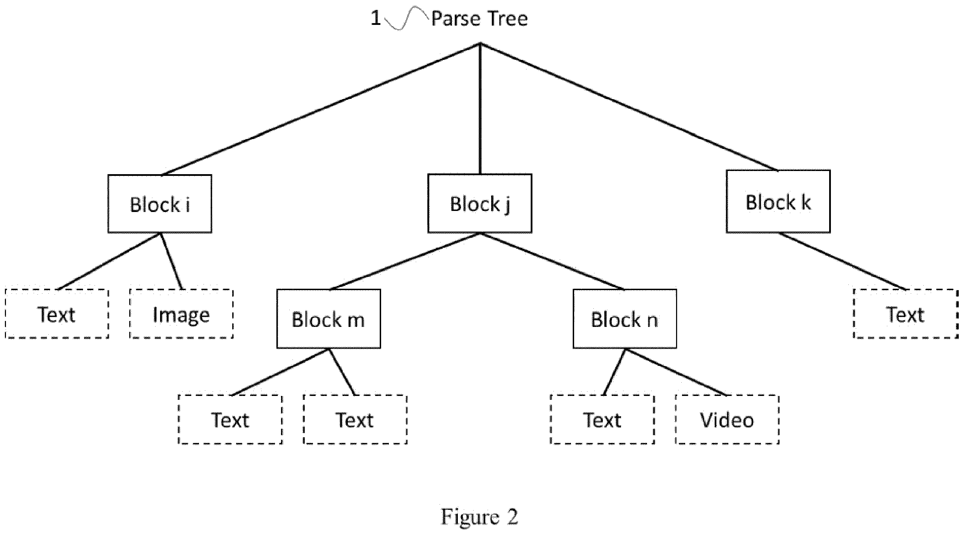

As shown in Figure 1, the data processing routine begins by parsing, at S101, the HTML document file into a nested block structure which can be represented by a parse tree, where blocks are defined as portions of content associated with block-level tags, such as <p>, <h1> and <div>. The parse tree is a simplified representation of the Document Object Model (DOM) tree; blocks associated with HTML tags that are considered extraneous for styling purposes are excluded from the parse tree. Examples of HTML tags that are considered extraneous for styling purposes are <body>, <ul> and <tr>. Blocks containing no content are also excluded from the parse tree. Figure 2 shows an example Parse Tree 1 having a first level with three separate blocks, namely Block i, Block j and Block k. As shown, Block i contains a portion of text and an image, Block j contains two further blocks - Block m and Block n - but no further content, and Block k contains a portion of text. Block m contains two separate portions of text, and Block n contains a portion of text and a video.

Having parsed the document to a nested block structure, the data processing routine gathers, at S103, features relating to the HTML document file as a whole. Examples of features relating to the HTML document file as a whole are user-defined keywords and automatically generated keywords. A suitable method for automatically generating keywords for this purpose is disclosed in the article "Divrank: the Interplay of Prestige and Diversity in Information Networks" by Q. Mei, J. Guo, and D. Radev (Proceedings of the 16th ACM SIGKDD International Conference on Knowledge Discovery and Data Mining, pp. 1009-1018, Phuket, Thailand, July 2010). Further examples of features relating to the HTML document file as a whole are metadata specified in the HTML document file. Such metadata typically include the language of the document, the title of the document, meta keywords, and the meta description of the document.

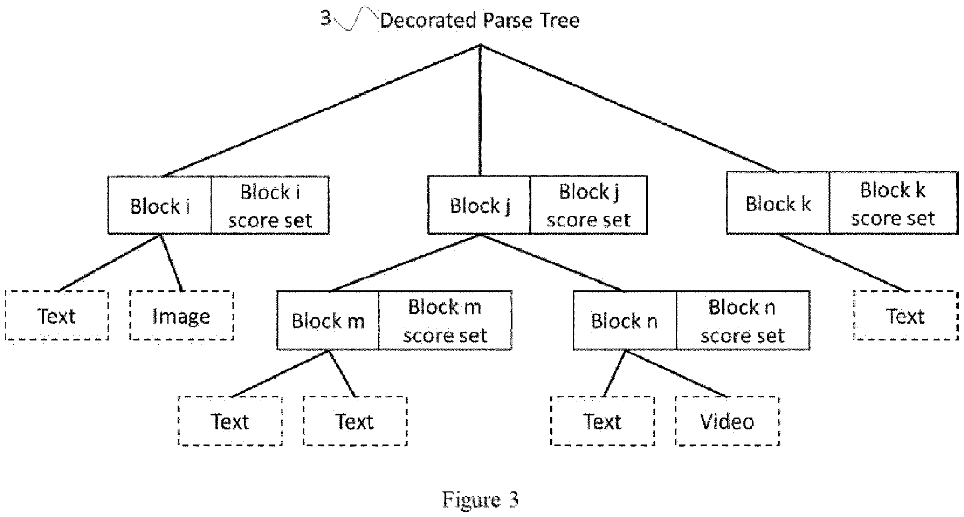

Next, the data processing routine scores, at S105, each block according to a defined set of block features. Examples of these block features include text features such as:
- the number of words in the block;
- the average length of words in the block; and
- the average length of sentences in the block;
linguistic features such as:
- the keyword density, which is defined as the proportion of text in a block that matches with any of the keywords associated with the HTML document;
and structural features such as:
- the hyperlink density, which is defined as the proportion of text in a block that is associated with an anchor tag;
- the text density, which is defined as the average number of tokens per line of HTML code in the block; and
- the depth, which is defined as the nesting level within the nested block structure.
Some of the block features, such as the keyword density, depend on the features relating to the HTML document file as a whole gathered at S103. In addition to the scored block features, a set of styling features is gathered for each block, including the Cascading Style Sheet (CSS) selector, the CSS class, and any inline CSS style applied to the block. Following this step, each block is associated with a resulting set of block scores, leading to a decorated parse tree as shown in Figure 3, where Decorated Parse Tree 3 corresponds to Parse Tree 1 of Figure 2.

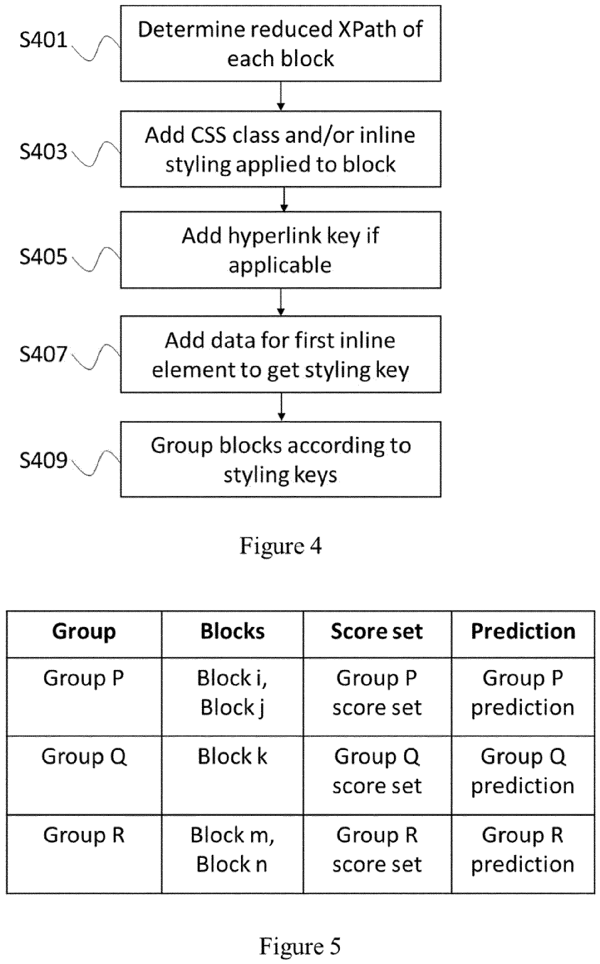

The data processing routine then groups, at S107, blocks according to styling information. The subroutine by which blocks are grouped is outlined in Figure 4. In particular, the subroutine determines, at S401, a reduced XPath of each block. The reduced XPath of a block is a representation of the path through the parse tree from the root element to the block, and consists of the names of the HTML tags encountered on the path, separated by forward slashes. The reduced XPath of a block is simpler than the raw XPath of the block, where the raw XPath of a block is a representation of the path through the DOM tree from the root element to the block. As an example, a block having the raw XPath /body/table/tr/td/ul/li has the reduced XPath /table/td/li. The subroutine then adds, at S403, a dot followed by the names of the CSS classes and/or inline styles applied to the block, if one or more CSS classes and/or inline styles are applied to the block. For example, a block having the reduced XPath /table/td/li, to which a CSS class named 'item' is applied, is assigned the string /table/td/li.item. If several CSS classes and/or inline styles are applied to the block, the names of the separate CSS classes and/or inline styles are sorted into an order, for example alphabetical order, before being added to the reduced XPath. The subroutine then adds, at S405, the hyperlink key '+ a' to the end of the assigned string if the block is contained between a pair of anchor tags, indicating that the entirety of the block is associated with a hyperlink. For example, if the block previously assigned the string /table/td/li.item is contained between two anchor tags, the block is assigned the updated string /table/td/li.item + a. The subroutine then adds, at S407, a dot followed by data associated with the first inline element within the block, if the block contains any inline elements. For example, if the first inline element contained within the block previously assigned the string /table/td/li. item + a is associated with the HTML tag <b>, indicating that the block contains a portion of bold text, then the block is assigned the updated string /table/td/li.item + a.b. If any CSS classes and/or inline styles are additionally applied to the first inline element, then the subroutine sorts the CSS classes and/or inline styles into an order, for example alphabetical order, and adds at S407 a dot followed by data representing both the HTML tag and the CSS classes and/or inline styles associated with the first inline element. The resulting updated string is called the styling key. The subroutine then groups, at S409, blocks with identical styling keys.

Figure 5 shows how the blocks of Figure 2 are grouped in this example: Block i and Block j have the same styling key, and are therefore grouped together in Group P; on the other hand, Block k has a different styling key from Block i and Block j, and therefore belongs to a different group, Group Q. Note that if the Blocks were grouped according to the structure of the DOM, Block i, Block j and Block k, being at the same level, would either all belong to the same group, or would all belong to different groups.

Having grouped the blocks according to styling information, the main data processing routine scores, at S109, each group according to a defined set of group features. Examples of group features include:
- the number of blocks in the group;
- the average number of words in the blocks within the group;
- the average length of words in the blocks within the group;
- the average hyperlink density of the blocks within the group;
- the average keyword density of the blocks within the group;
- the title number to block number, which is nonzero only if the title contains a number, in which case it is defined as the ratio of the number occurring in the title to the number of blocks in the group; and
- the spread, which is defined as the number of blocks from other groups occurring between the first and last block of the group.
Some of the group features, such as the average number of words in the blocks within the group, are aggregated from the block scores collected at S105. Following this step, each group is associated with a resulting set of group scores.

The data processing routine then identifies, at S111, a candidate set of purposes for each group, where the candidate set of purposes for a group depends on the set of group scores associated with the group. In this embodiment, the data processing routine employs a supervised Machine Learning model to identify a candidate set of purposes for each group, in which the computer program is first supplied with an annotated training corpus consisting of a set of documents for which the purpose of each group is known. In this embodiment, the Machine Learning model uses Random Decision Forests, which are well known in the art. Examples of trends captured by the Machine Learning model for the purpose of identifying a candidate set of purposes for each group are: the tendency of a navigation group to have a high average hyperlink density and a low average text length; the tendency of a group corresponding to the main body of text in an article to have a low average hyperlink density and a high average text length; the tendency of boilerplate groups to be clustered in one region of the web page, and therefore to have a low spread; and the tendency of a block containing the name of the author to appear in a group by itself, and to contain the word 'by' along with a string that is recognisable as a date.

The data processing routine predicts, at S113, a genre classification for the HTML document as a whole, where the predicted genre classification for the HTML document as a whole depends on the set of group scores gathered at S 109 and also the candidate sets of purposes for each group identified at S111. Examples of genre classifications are news article, listicle, interview, homepage, blog homepage, forum discussion, and catalogue section. In this embodiment, the data processing routine again employs a supervised Machine Learning model, based on Random Decision Forests, to predict a genre classification for the HTML document, in which the computer program is first supplied with an annotated training corpus consisting of a set of documents for which the genre classifications are known. An example of a trend captured by the Machine Learning model for the purpose of predicting a genre classification for the HTML document is the tendency of a listicle to have a title containing an integer number, corresponding to the number of items in the main list in the listicle, along with a group having a number of blocks equal to this integer number, further having listicle headings as a candidate purpose.

The data processing routine predicts, at S115, a purpose of each group in the document, where the predicted purpose of a group depends on the candidate set of purposes for the group, and also the predicted genre classification of the HTML document. In this embodiment, the data processing routine employs a rules-based method to predict a purpose of each group.

The data processing routine then processes, at S117, each group according to the predicted purpose of the group. In this example, the processing involves extracting the content of one or more groups depending on the predicted genre classification of the article, and the predicted purposes of the groups. An example of how the extracted content depends on the predicted genre classification is that if an HTML document is classified as an article, intermediate headings within the main body of text will be excluded, whereas if an HTML document is classified as a listicle, intermediate headings will be included in the extracted content. The output of the data processing routine includes two parts: the first part of the output is a plain text string containing the extracted text content, the Uniform Resource Locators (URLs) of any extracted images and videos, and selected features relating to the HTML document as a whole; and the second part of the output is HTML code associated with the extracted content, from which it is possible to reconstruct elements from the HTML document file such as bold text and hyperlinks. Finally, inline HTML tags are added to the HTML code that forms the second part of the output so that occurrences of keywords are highlighted.

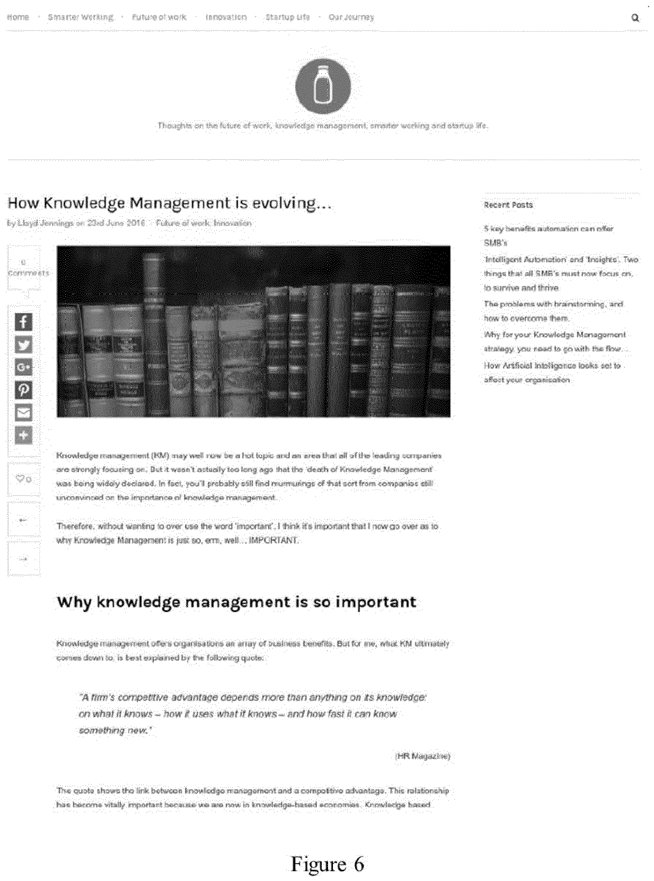

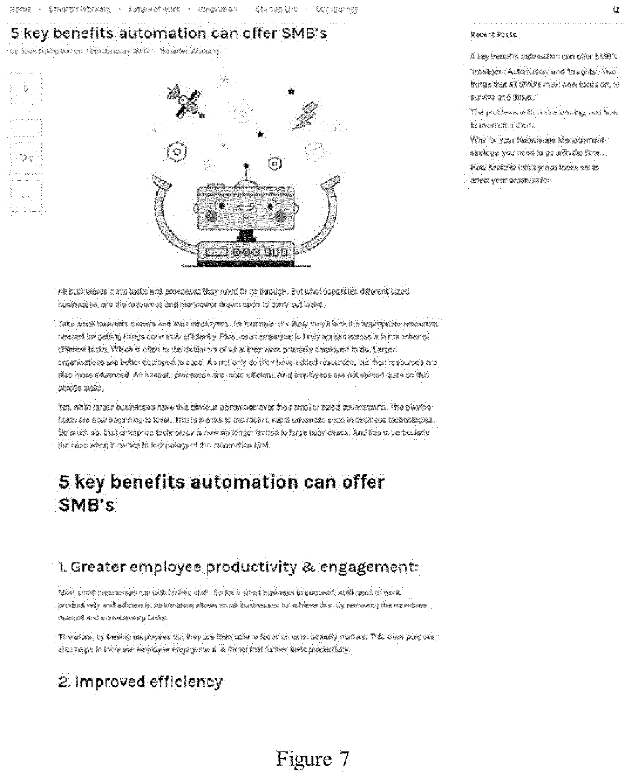

In order to illustrate the way in which the extraction differs in dependence on genre classification, two illustrative examples from different genres will now be discussed. The first example is for the web page http: //blog. skim. it/knowledge-management-evolution/, a screenshot of part of which is shown in Figure 6. The first example webpage has a typical layout for an article. The second example is for the web page http: //blog. skim. it/smb-automation/, a screenshot of part of which is shown in Figure 7. The second example web page has a typical layout for a listicle.

Table I shows examples of blocks from the web page of Figure 6, along with the styling key of each block as determined by the subroutine of Figure 4, and examples of block features associated with each block.

**Table I**

| **Block text and styling key** | **Block features** |
|---|---|
| Smarter working | n_words: 2 |
| | depth: 3 |
| /header/nav/li.menu-item + a | text_density: 2 |
| | keyword_density: 0.0 |
| | link_density: 1.0 |
| | avg_sent_len: 2.0 |
| | avg_word_len: 7.0 |
| | before_or_after_title: BEFORE |
| How Knowledge Management is evolving... | n_words: 5 |
| | depth: 4 |
| | text_density: 5 |
| /div/article/header/hl. entry-title | keyword_density: 0.4 |
| | link_density: 0.0 |
| | avg_sent_len: 5.0 |
| | avg_word_len: 6.6 |
| | before_or_after_title: TITLE |
| by Lloyd Jennings on 23rd June 2016·Future of work, Innovation | n_words: 10 |
| | depth: 4 |
| | text_density: 11 |
| /div/article/header/div.entry-met a | keyword_density: 0.0 |
| | link_density: 0.5454545454545454 |
| | avg_sent_len: 10.0 |
| | avg_word_len: 5.2 |
| | before_or_after_title: AFTER |
| Knowledge management (KM) may well now be a hot topic and an area that all of the leading companies are strongly focusing on. But it wasn't actually too long ago that the 'death of Knowledge Management' was being widely declared. In fact, you'll probably still find murmurings of that sort from companies still unconvinced on the importance of knowledge management. | n_words: 90 |
| | depth: 6 |
| | text_density: 15.5 |
| | keyword_density: 0.0784313725490196 |
| | link_density: 0.0 |
| | avg_sent_len: 22.5 |
| | avg_word_len: 4.811111111111111 |
| | before_or_after_title: AFTER |
| | |
| | |
| /div/article/div/div/div/p | |
| Why knowledge management is so Important | n_words: 6 |
| | depth: 6 |
| | text density: 6 |
| /div/article/div/div/div/h2 | keyword_density: 0.3333333333333333 |
| | link_density: 0.0 |
| | avg_sent_len: 6.0 |
| | avg_word_len: 5.833333333333333 |
| | before_or_after_title: AFTER |
| Knowledge management offers organisations an array of business benefits. But for me, what KM ultimately comes down to, is best explained by the following quote: | n_words: 25 |
| | depth: 6 |
| | text_density: 12.0 |
| | keyword_density: |
| | 0.06896551724137931 |
| | link_density: 0.0 |
| /div/article/div/div/div/p | avg_sent_len: 12.5 |
| | avg_word_len: 5.28 |
| | before_or_after_title: AFTER |
| A firm's competitive advantage depends more than anything on its knowledge: on what it knows - how it uses what it knows - and how fast it can know something new. | n_words: 30 |
| | depth: 6 |
| | text_density: 16.5 |
| | keyword_density: |
| | 0.029411764705882353 |
| | link_density: 0.0 |
| /div/article/div/div/div/p | avg_sent_len: 30.0 |
| | avg_word_len: 4.266666666666667, |
| | before_or_after_title: AFTER |
| Cheers | n_words: 1 |
| | depth: 6 |
| /div/article/div/div/div/p | text_density: 1 |
| | keyword_density: 0.0 |
| | link_density: 0.0 |
| | avg_sent_len: 1.0 |
| | avg_word_len: 6.0 |
| | before_or_after_title: AFTER |

Table II shows examples of how the blocks appearing in the web page of Figure 6 are grouped according to styling information, along with the styling key associated with each group, and examples of group features associated with each group. A bullet point followed by an ellipsis indicates further blocks that have not been included in the table.

**Table II**

| **Styling key and blocks** | | **Group features** |
|---|---|---|
| /header/nav/li.menu-item + a | | avg_link_density: 1.0 |
| | | avg_text_len: 1.83333333333 |
| • | Home | avg_keyword_density: 0.0 |
| • | Smarter Working | avg_word_len: 5.91666666667 |
| • | ... | n_blocks: 6 |
| • | Our Journey | rel_position_to_title: BEFORE |
| | | spread: 0 |
| | | title_number_to_block_number: 0.0 |
| /div/article/header/hl. entry-title | | avg_link_density: 0.0 |
| | | avg_text_len: 5.0 |
| | | avg_keyword_density: 0.4 |
| | | avg_word_len: 6.6 |
| • | How Knowledge Management is Evolving... | n_blocks: 1 |
| | | rel_position_to_title: TITLE |
| | | spread: 0 |
| | | title_number_to_block_number: 0.0 |
| /div/article/header/div.entry-meta | | avg_link_density: 0.545454545455 |
| | | avg_text_len: 10.0 |
| | | avg_keyword_density: 0.0, |
| • | by Lloyd Jennings on 23rd June 2016·Future of work, Innovation | avg_word_len: 5.2 |
| | | n_blocks: 1 |
| | | rel_position_to_title: 1 |
| | | spread: 0 |
| | | title_number_to_block_number: 0.0 |
| /div/article/div/div/div/p | | avg_link_density: 0.0 |
| | | avg_text_len: 111.846153846 |
| • | Knowledge management (KM) may well now be a hot topic and an area that all of the leading companies are strongly focusing on. But it wasn't actually too long ago that the 'death of Knowledge Management' was being widely declared. In fact, you'll probably still find murmurings of that sort from companies still unconvinced on the importance of knowledge management. | avg_keyword_density: 0.0427002978 |
| | | avg_word_len: 5.01506793375 |
| | | n_blocks: 13 |
| | | rel_position_to_title: 3 |
| | | spread: 14 |
| | | title_number_to_block_number: 0.0 |
| • | Knowledge management offers organisations an array of business benefits. But for me, what KM ultimately comes down to, is best explained by the following quote: | |
| **•** | ... | |
| • | Cheers | |
| /div/article/div/div/div/h2 | | avg_link_density: 0.0 |
| | | avg_text_len: 6.66666666667 |
| • | Why knowledge management is so important | avg_keyword_density: 0.1759259259 |
| | | avg_word_len: 6.86111111111 |
| • | ... | n_blocks: 6 |
| | | rel_position_to_title: 1 |
| | | spread: 17 |
| | | title_number_to_block_number: 0.0 |

The plain text string output by the data processing routine when applied to the example web page of Figure 6 is as follows (some of the "text" field has been omitted to save space, as indicated by ellipsis):

```
 {
 "authors": ["Lloyd Jennings"],
 "date": "2016-06-23",
 "description": "The death of knowledge management has been widely
 declared. This just isn't true. Instead, knowledge management is
 simply evolving. Here's why...",
 "images": ["http://blog.skim.it/wp-
 content/uploads/2016/06/KMheader.png",
 "http://blog.skim.it/wp-content/uploads/2016/06/KM4areas.png",
 "http://blog.skim.it/wp-content/uploads/2016/06/KMprocessVenn.png"],
 "keywords": ["knowledge management", "knowledge", "organisation",
 "process management",
 "Management", "business process"],
 "language": "en",
 "page_type": "article",
 "text": "Knowledge management (KM) may well now be a hot topic and an
 area that all of the leading companies are strongly focusing on. But
 it wasn't actually too long ago that the 'death of Knowledge
 Management' was being widely declared. In fact, you'll probably still
 find murmurings of that sort from companies still unconvinced on the
 importance of knowledge management.\n...Still questioning the
 importance of KM?\nCheers\nLloyd",
 "title": "The evolution of Knowledge Management"
 }
```

In this example, the HTML document is classified as an article, and therefore the intermediate heading 'Why knowledge management is so important' is excluded.

Table III shows examples of blocks from the web page of Figure 7, along with the styling key of each block as determined by the subroutine of Figure 4, and examples of block features associated with each block.

**Table III**

| **Block text and styling key** | **Block features** |
|---|---|
| 5 key benefits automation can offer SMB's | n_words: 8 |
| | depth: 4 |
| | text_density: 8 |
| /div/article/header/h1.entry -title | keyword_density: 0.125 |
| | link_density: 0.0 |
| | avg_sent_len: 8.0 |
| | avg_word_len: 4.375 |
| | before_or_after_title: TITLE |
| Yet, while larger businesses have this obvious advantage over their smaller sized counterparts. The playing fields are now beginning to level. This is thanks to the recent, rapid advances seen in business technologies. So | n_words: 62 |
| | depth: 6 |
| | text_density: 14.5 |
| | keyword_density: 0.02857142857142857 |
| | link_density: 0.0 |
| | avg_sent_len: 12.4 |
| much so, that enterprise technology is now no longer limited to large businesses. And this is particularly the case when it comes to technology of the automation kind. | avg_word_len: 5.161290322580645 before_or_after_title: AFTER |
| /div/article/div/div/div/p | |
| 5 key benefits automation can offer SMB's | n_words: 8 |
| | depth: 6 |
| | text_density: 8 |
| /div/article/div/div/div/h1 | keyword_density: 0.125 |
| | link_density: 0.0 |
| | avg_sent_len: 8.0 |
| | avg_word_len: 4.375 |
| | before_or_after_title: AFTER |
| 1. Greater employee productivity & engagement: | n_words: 5 |
| | depth: 6 |
| | text_density: 8.0 |
| /div/article/div/div/div/h2 | keyword_density: 0.25 |
| | link_density: 0.0 |
| | avg_sent_len: 2.5 |
| | avg_word_len: 7.6 |
| | before_or_after_title: AFTER |
| Most small businesses run with limited staff. So for a small business to succeed, staff need to work productively and efficiently. Automation allows small businesses to achieve this, by removing the mundane, manual and unnecessary tasks. | n_words: 36 |
| | depth: 6 |
| | text_density: 14.0 |
| | keyword_density: |
| | 0.047619047619047616 |
| | link_density: 0.0 |
| | avg_sent_len: 12.0 |
| | avg_word_len: 5.444444444444445 |
| | before_or_after_title: AFTER |
| /div/article/div/div/div/p | |

Table IV shows examples of how the blocks appearing in the web page of Figure 7 are grouped according to styling information, along with the styling key associated with each group, and examples of group features associated with each group. A bullet point followed by an ellipsis indicates further blocks that have not been included in the table.

**Table IV**

| **Styling key and blocks** | | **Group features** |
|---|---|---|
| /div/article/header/h1.entry-title | | avg_link_density: 0.0 |
| | | avg_text_len: 8.0 |
| | | avg_keyword_density: 0.125 |
| • | 5 key benefits automation can offer SMB's | avg_word_len: 4.375 |
| | | n_blocks: 1 |
| | | rel_position_to_title: TITLE |
| | | spread: 0 |
| | | title_number_to_block_number: 5.0 |
| /div/article/div/div/div/p | | avg_link_density: 0.0 |
| | | avg_text_len: 27.0588235294 |
| • | ... | avg_keyword_density: 0.0476594706 |
| • | Yet, while larger businesses have this obvious advantage over their smaller sized counterparts. The playing fields are now beginning to level. This is thanks to the recent, rapid advances seen in business technologies. So much so, that enterprise technology is now no longer limited to large businesses. And this is particularly the case when it comes to technology of the automation kind | avg_word_len: 5.17442536915 |
| | | n_blocks: 17 |
| | | rel_position_to_title: 2 |
| | | spread: 6 |
| | | title_number_to_block_number': |
| | | 0.29411764705882354 |
| • | Most small businesses run with limited staff. So for a small business to succeed, staff need to work productively and efficiently. Automation allows small businesses to achieve this, by removing the mundane, manual and unnecessary tasks. | |
| • ... | | |
| /div/article/div/div/div/h1 | | avg_link_density: 0.0 |
| | | avg_text_len: 8.0 |
| • | 5 key benefits automation can offer SMB's | avg_keyword_density: 0.125 |
| | | avg_word_len: 4.375 |
| | | n_blocks: 1 |
| | | rel_position_to_title: 3 |
| | | spread: 0 |
| | | title_number_to_block_number: 5.0 |
| /div/article/div/div/div/h2 | | avg_link_density: 0.0 |
| | | avg_text_len: 3.6 |
| | | avg_keyword_density: 0.09 |
| • | 1. Greater employee | avg_word_len: 5.75333333333 |
| | | n_blocks: 5 |
| | productivity & engagement: | rel_position_to_title: 4 |
| • | 2. Improved efficiency | spread: 9 |
| | | title_number_to_block_number: 1.0 |
| • | ... | |

The plain text string output by the data processing routine when applied to the example web page of Figure 7 is as follows (some of the "text" field has been omitted to save space, as indicated by ellipsis):

```
 {
 "authors": ["Jack Hampson"],
 "date": null,
 "description": "In this post we highlight the benefits of automation
 for small
 businesses. The principles to follow for success. And the processes
 to focus on first.",
 "images": ["http://blog.skim.it/wp-
 content/uploads/2016/09/AutomationHeader.jpg"],
 "keywords": ["business automation", "business", "employee
 productivity", "customer",
 "automation", "sales process"],
 "language": "en",
 "listicle_subheadings": [
 {"tag": "h2", "children": ["1. Greater employee productivity &
 engagement:"]},
 {"tag": "h2", "children": ["2. Improved efficiency"]},
 {"tag": "h2", "children": ["3. Increased sales"]},
 {"tag": "h2", "children": ["4. Better customer service"]},
 {"tag": "h2", "children": ["5. Faster growth"]}
 ],
 "page_type": "listicle",
 "text": "All businesses have tasks and processes they need to go
 through. But what separates different sized businesses, are the
 resources and manpower drawn upon to carry out tasks. \n...Hopefully
 now you can see the benefits of automation to your business. Its
 something we believe in wholeheartedly at Skim.it",
 "title": "5 key benefits automation can offer your SMB"
 }
```

In this example, the HTML document is classified as a listicle, and therefore the intermediate headings are predicted to be listicle subheadings, and are included within the extracted content.

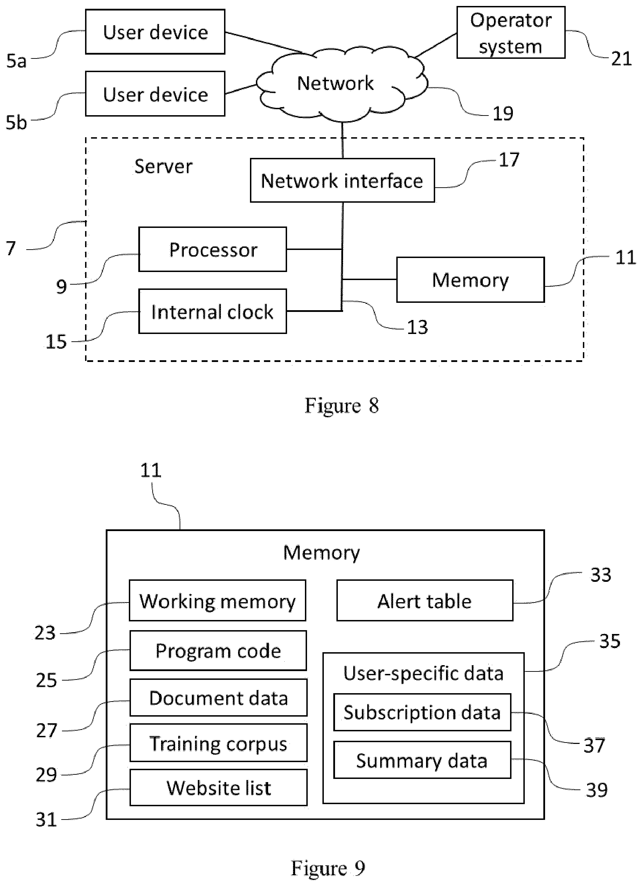

The computer system of Figure 8 is adapted to implement the method outlined in the previous figures according to a Software as a Service (SaaS) model. In this implementation, the function of the service is to monitor websites automatically, such that when new information content is detected within one of the websites that is relevant to one or more user-specified search terms, the main content of the corresponding web page is extracted, and a summary of the extracted content is generated for the user. The dashed box in Figure 8 represents a server 7, which contains a processor 9 connected to memory 11 by a memory bus 13. The server 7 further contains an internal clock 15 and a network interface 17. The memory 11 includes volatile memory such as cache memory and random access memory (RAM), and further includes non-volatile storage such as solid state drives and hard disk drives. The server 7 is connected to a network 19, which is further connected to an operator system 21 and multiple user devices 5, of which only user device 5a and user device 5b are shown. As shown in figure 9, the memory 11 includes working memory 23, and further stores program code 25, document data 27, a training corpus 29, a website list 31, an alert table 33, and user-specific data 35. The user-specific data 35 contains subscription data 37 and summary data 39.

According to the implementation of Figures 8 and 9, each user holds an account with the operator of the service. The subscription data 37 include the login details and payment details of each user. At the first instance of using the service, a user connects to the server 7 with a user device 5 via the network interface 17, and specifies a set of alerts, where an alert is a search term relating to a topic or entity of interest to the user. The user further sends signals to the server 7 via the network interface 17 to add or remove alerts from this set at any time during the subsequent operation of the service. The alert table 33 contains a list of all of the alerts specified by users of the service, such that each unique alert in the alert table 33 is associated with a list of one or more users that have specified the alert. The website list 31 contains the URLs of websites to be monitored by the system. In order to update the website list, the operator of the system connects to the server 7 from the operator system 21 via the network interface 17.

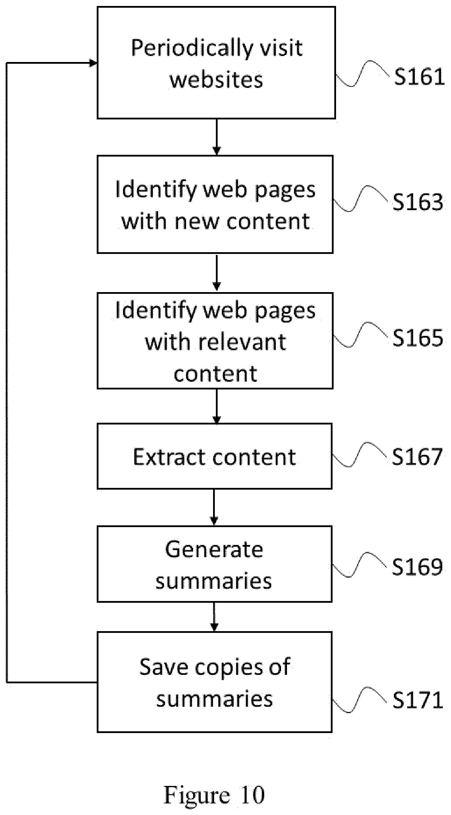

As shown in Figure 10, when the service is in operation the server 7 periodically visits, at S161, websites specified in the website list 31, according to time intervals measured by the internal clock 15. For each website visited, the server 7 identifies, at S163, web pages that have been added or altered since the last time the server 7 visited the website. Of the web pages that have been added or altered, the server 7 identifies, at S165, web pages that contain content that is relevant to one or more of the alerts stored in the alert table 33.

For each of the web pages that contains content that is relevant to one or more of the alerts stored in the alert table 33, the server 7 performs, at S167, the extraction process in accordance with the example of Figure 1: the server downloads document data 27 from to the HTML document of the web page and the processor 9 implements instructions in the program code 21 to carry out the data processing routine of Figure 1.

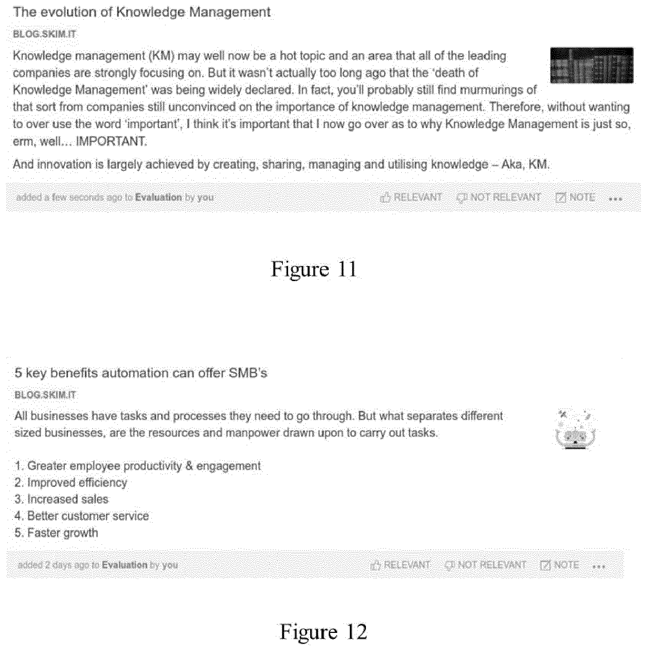

For each of the web pages from which content is extracted, the server 7 generates a summary, at S169, of the extracted content, where the content of the summary depends on the predicted genre classification of the web page. In the example summary of Figure 11, corresponding to an article, full sentences within the extracted "text" field are ranked according to features such as the number of words in common with the title, and the number of words in the sentence, and the most highly ranked sentences are included in the summary. In the example summary of Figure 12, corresponding to a listicle, the headings of the main list items are included in the summary.

A separate copy of the summary is stored, at S 171, as user-specific summary data 39 for each user in the alert table 33 that specified one or more of the alerts relating to the summary. A user accesses the user-specific summary data 39 by connecting to the server 7 with a user device 5 via the network interface 17. The network interface further provides users with options to state whether each summary stored within the user-specific summary data 39 is relevant, not relevant, or of poor quality; the users thereby continually evaluate the performance of the service. In the example summaries shown in Figures 11 and 12, these options are selected using the virtual buttons at the lower right corner of the summaries. During the continued operation of the service, the Machine Learning module automatically adjusts the parameters of the model depending on this continual evaluation of the service in order to improve the performance of the service.

The above embodiment is to be understood as an illustrative example of the invention. Further embodiments are envisaged. For example, in some embodiments the data processing method is applied to document data written in other markup languages such as Extensible Markup Language (XML) or LaTeX; in these cases, a block may be defined as a portion of content data associated with any tag from a predefined set of tags, where the predefined set of tags is specific to the language of the document data being processed. The predefined set of tags used to define a block is not limited to block-level HTML tags or equivalent tags in other markup languages; other predefined set of tags may be used to define blocks. In some examples, the data processing routine is adapted to process document data in other formats such as a word processor format or Portable Document Format (PDF); in these cases a block may be defined as a portion of content data that is separated from other portions of content data by line breaks. In every embodiment, a block of content data is a portion of content data that is separated from other content data in a prescribed way.

In some examples, the data processing routine detects the format of the input document data. In this case, document data with certain formats are converted to HTML using a converter before being parsed by an HTML parser. Document data with certain other formats are parsed directly using a parser that is adapted for the format of the document data. Irrespective of the format of the document data being processed, the document data are parsed to a nested block structure.

The set of example block features and the set of example group features given in the previous examples are to be understood as being neither exhaustive, nor limiting. Other features are envisaged, for example the number of references to named entities appearing in a block. Block features and group features are metrics used to measure quantitative properties of blocks and groups respectively; for each block feature a numerical score is calculated for the corresponding metric and assigned to the block, and for each group feature a numerical score is calculated for the corresponding metric and assigned to the group. Furthermore, the list of example genre classifications is to be understood as neither exhaustive nor limiting.

In some embodiments, the order in which the data processing routine is performed is different from the order outlined in Figure 1. For example, in some embodiments the scoring of block features is performed after the grouping of blocks according to styling information. In other embodiments, the blocks features are not scored individually, and only group features are scored. In other embodiments, the step of gathering features relating to the document file as a whole is omitted. In some embodiments the step of predicting a genre classification and the step of predicting a purpose for each group are performed in parallel. In some embodiments, the step of identifying a candidate set of purposes for each group is omitted.

In the embodiment described in detail above, the data processing routine uses the subroutine of Figure 4 to group blocks according to styling information. In some embodiments, alternative methods are used to identify the styling of blocks. In one example, blocks are grouped according to the font and size of text appearing within the block. In some embodiments, a styling key is determined for the purpose of grouping blocks according to styling information. A styling key is a set of data generated from the styling information in accordance with a set of rules such that blocks are assigned the same styling key if the styling information associated with the blocks is consistent in a prescribed way. In some embodiments, the styling key is a string of alphanumeric characters, symbols, or a combination of alphanumeric characters and symbols. In some embodiments, no explicit styling key is determined in the grouping of blocks according to styling information.

Alternative algorithms are available that are suitable for identifying a candidate set of purposes for each group and for predicting a genre classification of the document data: in some embodiments, other supervised Machine Learning models are used such as Support Vector Machines; in other embodiments, unsupervised Machine Learning models are used; in other embodiments, no Machine Learning model is employed and instead a rules-based method is applied to identify a candidate set of purposes for each group; in other embodiments, a rules-based method is used to predict a genre classification of the document data. In some embodiments, a Machine Learning module is used to predict a purpose of each group.

In some embodiments, the processing of each group according to predicted purpose includes generating a summary of the content extracted from the document or documents, as is the case in the implementation of Figures 8, 9 and 10. Examples of suitable known summary methods for this purpose are disclosed in patent specification US2015095770 AA and patent specification US2015339288 AA. In other embodiments, the processing of each group according to predicted purpose includes indexing the document based on the content of one or more groups, for example as a step carried out by a search engine.

The architecture of the system used to implement the method of the present invention may depart from that shown in Figure 8. In some examples, the system includes more than one server. In other examples, the data processing routine is implemented by software stored on a user device such as a personal computer, tablet or smartphone, rather than being implemented on a separate server. Furthermore, in some examples websites are not visited periodically by a server, and instead users supply the data processing routine with document data. Examples of how a user may supply the data processing routine with document data include: providing the URL of a web page; uploading document data to a server from a user device; clicking a virtual button in a web browser extension whilst visiting a web page; or providing access to bookmarks or a browsing history saved by a web browser.

Certain system components and methods described herein may be implemented by way of non-transitory computer program code that is storable on a non-transitory storage medium. The non-transitory storage medium can be any media that can contain, store, or maintain programs and data for use by or in connection with an instruction execution system. Machine-readable media can comprise any one of many physical media such as, for example, electronic, magnetic, optical, electromagnetic, or semiconductor media. More specific examples of suitable machine-readable media include, but are not limited to, a hard drive, a random access memory (RAM), a read-only memory (ROM), an erasable programmable read-only memory, or a portable disc.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method for processing document data, wherein the document data comprises content data and styling information, the method comprising:
parsing the document data to identify blocks of content data, each block of content data having associated styling information;
grouping the blocks of content data according to the styling information to form a plurality of groups of blocks;
generating a set of scores for each group of blocks;
predicting a purpose for each group of blocks using the generated set of scores associated with the group;
and processing the blocks in each group in accordance with the predicted purpose of the group.

2. The method of Claim 1, wherein the generation of a set of scores for a group of blocks comprises generating scores for blocks within the group of blocks and generating at least one score for the group of blocks using the generated block scores for that group of blocks.

3. The method of any previous claim, wherein the prediction of a purpose of each group of blocks comprises:
identifying a candidate set of purposes for each of the group of blocks;
predicting the genre classification for the document data using the candidate set of purposes; and
for each group of blocks, selecting the predicted purpose from the corresponding candidate set of purposes in dependence on the predicted genre classification.

4. The method of any previous claim, wherein processing the blocks in each group comprises determining whether or not the content of a group of blocks is to be extracted in dependence on the predicted purpose for the group of blocks.

5. The method of Claim 4, wherein processing the blocks in each group further comprises generating a summary from the content data of the extracted groups of blocks.

6. The method of any previous claim, wherein the document data comprises at least one document file in a markup language.

7. The method of Claim 6, wherein the markup language is either HTML or XHTML.

8. The method of Claim 6 or 7, wherein blocks are identified using block-level tags.

9. The method of any previous claim, wherein blocks are identified using line breaks.

10. The method of any previous claim, wherein grouping the blocks according to the styling information comprises determining a styling key for each block and grouping together blocks that have the same styling key.

11. The method of Claim 10, wherein the document data comprises at least one document file in HTML or XHTML, wherein determining a styling key for a block comprises:
generating a string corresponding to the location of the block within a neutral nested block structure; and
updating the generated string to include at least one of:
information that indicates whether a CSS class and/or inline style is applied to the block;
information that indicates whether the entire block is associated with a hyperlink; and
information that indicates whether an inline HTML element is located within the block.

12. The method of any previous claim, wherein predicting a purpose for each group comprises using a Machine Learning model.

13. A data processing system comprising means for performing a method as claimed in any preceding claim.

14. A computer program comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
